Europäisches Patentamt

European Patent Office

Office européen des brevets

(11) Publication number: **0 363 186 B1**

# EUROPEAN PATENT SPECIFICATION

(45) Date of publication of patent specification: **29.12.93**  (51) Int. Cl.5: **G11B 7/00**, G11B 7/28, G11B 20/10

(21) Application number: **89310170.9**

(22) Date of filing: **04.10.89**

(54) **Method for setting a sound recording level.**

(30) Priority: **05.10.88 JP 251226/88**
**05.10.88 JP 251227/88**
**05.10.88 JP 251228/88**

(43) Date of publication of application:
**11.04.90 Bulletin 90/15**

(45) Publication of the grant of the patent:
**29.12.93 Bulletin 93/52**

(84) Designated Contracting States:
**DE FR GB**

(56) References cited:
**EP-A- 0 255 036**
**EP-A- 0 255 918**
**EP-A- 0 283 304**

(73) Proprietor: **PIONEER ELECTRONIC CORPORATION**
**No. 4-1, Meguro 1-chome**
**Meguro-ku Tokyo 153(JP)**

(72) Inventor: **Ishii, Hidehiro Pioneer Electronic**
**Corporation**
**Tokorozawa Works, No. 2610**
**Hanazono 4-chome**
**Tokorozawa-shi Saitama(JP)**

Inventor: **Takeya, Noriyoshi Pioneer Electronic Corporation**
**Tokorozawa Works, No. 2610**
**Hanazono 4-chome**
**Tokorozawa-shi Saitama(JP)**
Inventor: **Miura, Chiharu Pioneer Electronic**
**Corporation**
**Tokorozawa Works, No. 2610**
**Hanazono 4-chome**
**Tokorozawa-shi Saitama(JP)**
Inventor: **Fukuda, Tatsuya Pioneer Electronic**
**Corporation**
**Tokorozawa Works, No. 2610**
**Hanazono 4-chome**
**Tokorozawa-shi Saitama(JP)**

(74) Representative: **Brunner, Michael John et al**
**GILL JENNINGS & EVERY**
**Broadgate House**
**7 Eldon Street**
**London EC2M 7LH (GB)**

EP 0 363 186 B1

## Description

The present invention relates to a method for setting a sound recording level, and more particularly, to a sound level setting method for re-recording a signal recorded on a digital audio disk (hereinafter a "disk") to another recording medium such as a magnetic tape, etc.

In the conventional sound recording level setting method, a peak value of an audio signal is detected by playing a disk every few seconds. A variable gain amplifier amplifies the audio signal provided from the disk by a difference in voltage between the detected peak value and a predetermined reference level to set an amplification factor. Such a conventional method is disclosed in EP-A-0283304. In such a method, a jumping operation over a predetermined number of tracks and a playing operation for a few seconds are alternately performed. Further, a sampling operation is performed to detect the peak voltage level of the audio signal provided in the playing operation. The sound recording level is set according to a maximum value of the sampled values provided by the sampling operation.

In the conventional method mentioned above, when the audio signal instantaneously exhibits a very large voltage level in comparison with other voltage levels, the sound recording level is set to a level conforming to this instantaneously very large voltage level, thereby increasing the interval in which the sound recording level is not optimal.

Moreover in such a conventional method, when several musical selections are recorded on the disk, and the number of jumped tracks is large, the sampling operation of the peak level cannot be sufficiently performed for musical selections having a short playing time. Further, in the conventional system, the sound recording level cannot be preferably set for musical selections having a short playing time. Therefore, when the number of jumped tracks is small, the time required to set the sound recording level becomes long.

In addition, in the case of a disk on which the signal is recorded so that the linear velocity of the disk at the playing time is constant when two pieces of music having the same playing time are recorded onto the same disk, the number of recording tracks recorded on the inner circumferential side of the disk is greater than that on the outer circumference. Therefore, in the conventional method for performing the jumping operation by a predetermined number of tracks, the sampling operation is not sufficiently performed with respect to music recorded on the outer circumferential side of the disk. Accordingly, the sound recording level cannot be preferably performed with respect to the music recorded on the outer circumferential side of the disk.

With the above-mentioned problems in mind, a first object of the present invention is to provide a sound recording level setting method for setting a sound recording level even when the re-recording operation is performed in accordance with an audio signal instantaneously having a very large voltage level in comparison with other voltage levels.

The first object is accomplished by the sound recording level setting method of the present invention, in which a disk player alternately performs the playing and jumping operations, and provides a group of sampled values which are peak values of the audio signal obtained from the disk during each playing operation, thereby setting the sound recording level in accordance with an average value of the sampled value group.

A second object of the present invention is to provide a sound recording level setting method for preferably setting a sound recording voltage level for musical selections having a short playing time when a plurality of music recorded on a disk is rerecorded.

The second object is accomplished by the sound recording level setting method of the present invention, in which the disk player alternately performs the playing and jumping operations. A peak level of an audio signal provided from the disk is sampled in each playing operation to obtain a sampling value. At this time, the number of jumped tracks in the jumping operation is changed in accordance with the playing time of each piece of music to provide at least a predetermined number of sampled values during each musical selection.

A third object of the present invention is to provide a sound recording level setting method for preferably setting a sound recording voltage level according to an audio signal recorded at any position of the disk.

The third object is accomplished by the sound recording level setting method of the present invention, in which the disk player alternately performs the playing and jumping operations. A peak level of the audio signal obtained from the disk in each playing operation is sampled to provide a sampled value. At this time, the number of jumped tracks in the jumping operation is reduced as the jumping operation is performed toward the outer circumference of the disk.

In the drawings:-

Figure 1 is a block diagram showing the apparatus for the recording level setting method of the present invention;

Figure 2 is a flow chart showing a first embodiment of the operation of a processor in the apparatus for setting the sound recording level in Figure 1;

Figure 3 is a flow chart showing the operation of a second embodiment of a processor in the apparatus for setting the sound recording level in Figure 1;

Figure 4 is a flow chart showing the operation of a third embodiment of a processor in the apparatus for setting the sound recording level in Figure 1; and

Figure 5 is a graph showing the relation between the playing time and the number of jumped tracks.

The preferred embodiments of a sound recording level setting method of the present invention will now be described in detail with reference to the accompanying drawings.

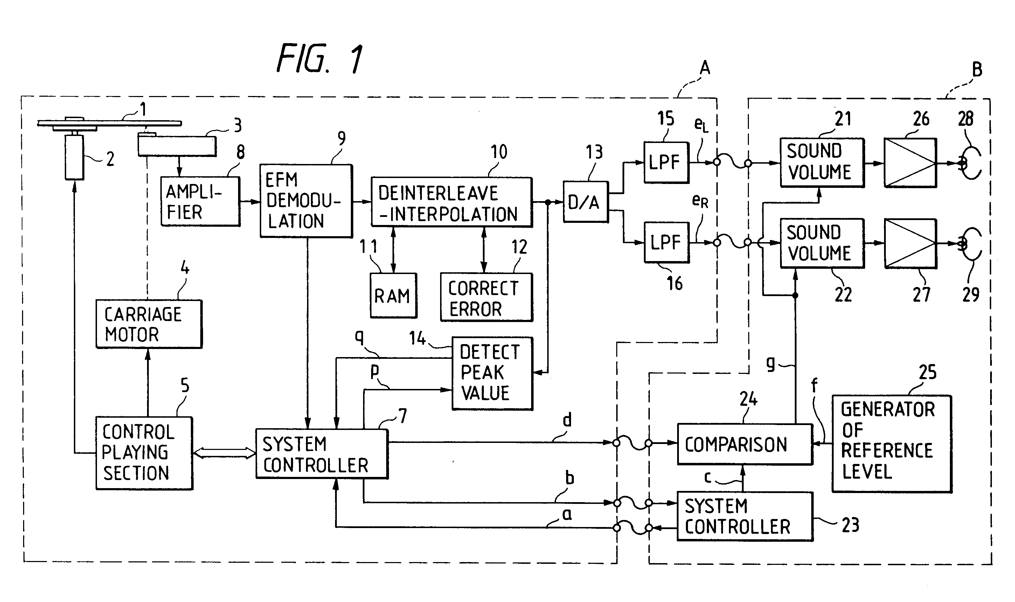

In Figure 1, a disk on which music has been recorded is rotated by a spindle motor 2. By the rotation of the disk 1, a signal recorded on the disk 1 is read by a pickup 3. The pickup 3 is supported by a carriage (not illustrated) moved by a carriage motor 4 in the radial direction of the disk 1. A light spot for reading information of the pickup 3 is freely positioned in the radial direction of the disk 1. A spindle servo system, a focusing servo system, a tracking servo system, a carriage servo system, etc. are provided, but are not shown in the figures since these servo systems are already well known in the art.

The spindle motor 2 and the carriage motor 4 are driven by the spindle servo system, the carriage servo system or a control circuit 5 for controlling the operation of a playing section. The playing section control circuit 5 drives the spindle motor 2 and the carriage motor 4 in accordance with commands from a system controller 7, and turns the above servo systems (not illustrated) on and off.

A RF (high frequency) signal outputted from the pickup 3 is amplified by an RF amplifier 8 and is then supplied to an EFM demodulating circuit 9. The EFM demodulating circuit 9 performs EFM-demodulating processing with respect to a pulse signal provided by slicing the RF signal to form a subcode and PCM data, i.e., digital data including audio information of time-sharing multiplexed right and left channels. The digital data including the audio information and outputted from the EFM demodulating circuit 9 is supplied to a deinterleave-interpolating circuit 10. The deinterleave-interpolating circuit 10 changes to an original state the digital data rearranged with respect to the sequential order by the interleaving operation performed at the recording time in cooperation with a RAM 11, and further transmits this digital data to an error correcting circuit 12. When a signal is output indicating that the error correcting circuit 12 is disabled, the deinterleave-interpolating circuit 10 interpolates error data in the output data of the error correcting circuit 12 by an average value interpolating method. Further, the error correcting circuit 12 corrects the error by a CIRC (Cross Interleave Reed Solomon Code) and supplies the digital data to the deinterleave-interpolating circuit 10. When correction is disabled, the error correcting circuit 12 outputs a signal to so indicate.

The output data of the deinterleave-interpolating circuit 10 is supplied to a D/A (digital/analog) converting circuit 13 and a peak value detecting circuit 14. The peak value detecting circuit 14 is operated in response to a detecting command signal $p$ outputted from a system controller 7 for example, and holds and outputs maximum value data with respect to a plurality of data sequentially supplied during a period in which the detecting command signal $p$ is continuously provided. Output data $q$ of this peak value detecting circuit 14 is supplied to the system controller 7. The D/A converting circuit 13 has a demultiplexer for separating the digital data including the audio information of the time-sharing multiplexed right and left channels every channel to reproduce audio signals $e_L, e_R$ of the left and right channels, respectively. LPFs (low pass filters) 15 and 16 remove unnecessary components from the reproduced audio signals $e_L$, $e_R$ of the left and right channels, and thereafter the reproduced audio signals are supplied to audio output terminals of a disk player A.

On the other hand, the subcode outputted from the EFM demodulating circuit 9 is supplied to the system controller 7. The system controller 7 constitutes a microcomputer composed of e.g., a processor, a ROM, a RAM, a timer, etc. The system controller 7 performs calculations according to data or a program stored in the ROM or the RAM by commands according to a keying operation supplied from an unillustrated operating section, or a command signal $a$ for setting the sound recording level supplied from the tape recorder B. Thereafter, the system controller 7 supplies an instruction signal such as play, search, jump, etc. to the playing section control circuit 5. The system controller 7 further supplies to control output terminals thereof a control signal $b$ and peak value data $d$ transmitted to the tape recorder B. The audio signals $e_L$, $e_R$ supplied to the audio output terminals of the disk player A are supplied to sound volume sections 21, 22 of an electronic or mechanical type through audio input terminals of the tape recorder B. The control signal $b$ and the peak value data $d$ supplied to the control output terminals of the disk player A are respectively supplied to a system controller 23 and a comparing circuit 24 in the tape recorder B. The system controller 23 receives data according to a keying operation of a operating section ( not illustrated), and transmits a command signal a for setting a sound recording level. The system controller 23 also transmits a comparing command signal c in response to the control signal b. The comparing command signal c outputted from this system controller 23 is supplied to the comparing circuit 24.

Reference level data f outputted from a reference level generating circuit 25 is supplied to the comparing circuit 24. The reference level generating circuit 25 generates digital or analog data corresponding to a reference level designated by manual operation. The comparing circuit 24 produces an output g composed of a digital or analog signal according to the difference between the output f of the reference level generating circuit 25 and the peak value data d, and supplies this output g to the sound volume sections 21, 22.

The sound volume sections 21, 22 damp the audio signals $e_L$, $e_R$ at a damping factor according to the voltage level of the output g of the comparing circuit 24, for example. The outputs of these sound volume sections 21, 22 are supplied to sound recording heads 28, 29 through sound recording amplifiers 26, 27 to record the audio signals $e_R$, $e_L$ onto a tape (not illustrated).

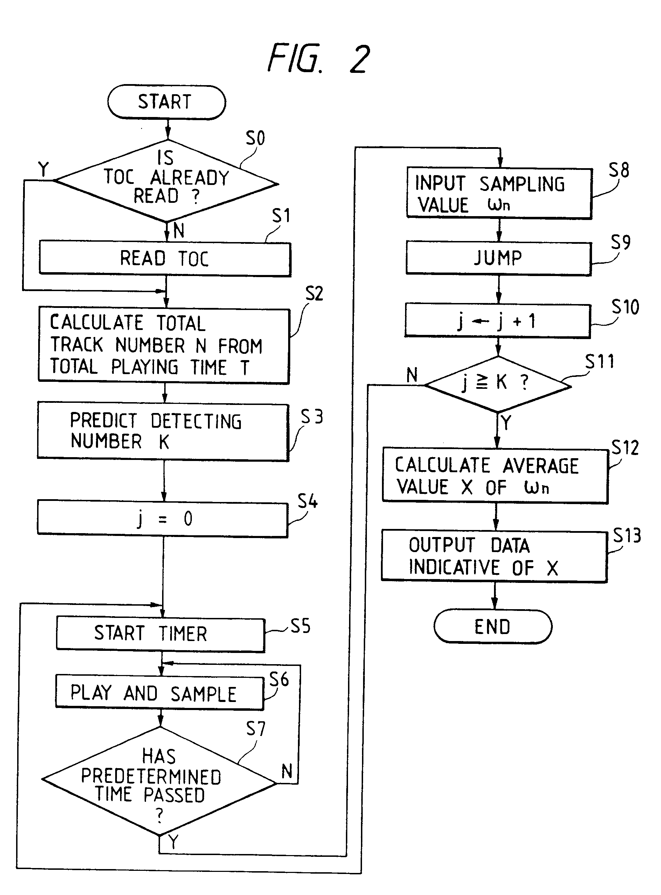

The operation of the first embodiment of the processor in the system controller 7 of the disk player A mentioned above will next be described with reference to the flow chart in Figure 2.

When the command signal a for setting the sound recording level is outputted during the execution of a main routine, the processor proceeds to step S0 and judges whether TOC (Table of Contents) data recorded as a subcode in the inner circumference of the disk 1 has been read. When it is judged that the TOC data has not been read in step S0, the processor proceeds to step S1 and transmits a playing command signal to the playing section control circuit 5 to start a reading operation of the information recorded on the disk 1, thereby inputting the TOC data. Next, the processor detects a total playing time by the inputted TOC data and calculates the total number of tracks N (step S2). The processor then predicts the total number of detections K from the calculated total number of tracks N and the number of jumped tracks N′ at one time (step S3). When it is judged that the TOC data has already been read in the step S0, the processor immediately proceeds to step S2 and calculates the total number of tracks N.

After the execution of step S3, the processor sets a counting value j, for detecting the number of jumps, to 0 and stores this counting value in a predetermined address of the RAM (step S4). Subsequently, the processor starts a timer (step S5) and then transmits the playing command to the playing section control circuit 5 and also transmits the detecting command signal p to the peak value detecting circuit 14 (step S6). Next, the processor judges whether or not a predetermined time has passed by the timer since the start of the playing operation (step S7).

When it is judged in step S7 that the predetermined time has not passed since the start of the playing operation, the processor proceeds again to the step S6. Conversely, when it is judged in the step S7 that the predetermined time has passed after the start of the playing operation, the processor stops the transmission of the detecting command signal p, and inputs the output of the peak value detecting circuit 14 as a sampled value $\omega_n$ classified with respect to grades (step S8). The processor then transmits commands for providing the jumping operation of the number of jumped tracks N′ to the playing section control circuit 5(step S9). Subsequently, the processor increments the counting value j by one (step S10), and determines whether or not the counting value j is greater than K (step S11).

When it is judged in the step S11 that the counting value j is not greater than K, the processor proceeds again to step S5. When it is judged in the step S11 that the counting value j is greater than K, the processor calculates an average value X of the sampled value $\omega_n$ by the following formula (step S12).

$$X = \frac{1}{K} \cdot \sum_{n=1}^{\ell} \Delta n \ \omega_n \qquad \dots\dots\dots\dots\dots\dots (1)$$

where $\Delta n$ designates a frequency of the sampled value (grade value) $\omega_n$. The processor then transmits data indicative of the obtained average value as sampled value data d as well as the control signal b (step S13), and again executes the routine executed just before it proceeds to the step S0.

In the above steps S5 to S8, the playing operation is performed for a predetermined time and the sampling operation of the peak value of the reproduced audio signal is performed. The obtained peak value is stored as the sampled value $\omega_n$ classified with respect to grades in a predetermined region of the RAM within the system controller 7. In the steps S9 to S11, the playing operation for the sampling of the steps S5 to S8 and the jumping operation of the number of jumped tracks N′ are alternately performed every K times in the entire region of the disk 1 containing the recorded audio signal.

4

Accordingly, the K peak values are obtained in the steps S5 to S11 and are stored in the predetermined region of the RAM as the sampled value $\omega_n$ classified with respect to grades. The average value X of the sampled value $\omega_n$ is calculated in step S12, and the sampled value data d indicative of the average value X is supplied to the comparing circuit 24 in step S13. The data f outputted from the reference level generating circuit 25 is data indicative of an optimal sound recording level set by an operator in advance. The voltage levels of the audio signals $e_L$, $e_R$ from the disk player A are controlled in accordance with the signal g corresponding to the difference between the peak value data d and the above data indicative of the optimal sound recording level. Accordingly, the voltage level of the audio signal is automatically controlled such that the average value of the peak value of the audio signal provided from the disk 1 is equal to the optimal sound recording level set by the operator in advance with respect to the tape recorder B.

Thus, even when the re-recording operation is performed with respect to an audio signal instantaneously having a very large voltage level in comparison with other voltage levels, the sound recording level does not conform to this instantaneously very large voltage level, but conforms to the average of the peak value. Therefore, a preferable sound recording level can be set and the interval providing the optimal sound recording level is large.

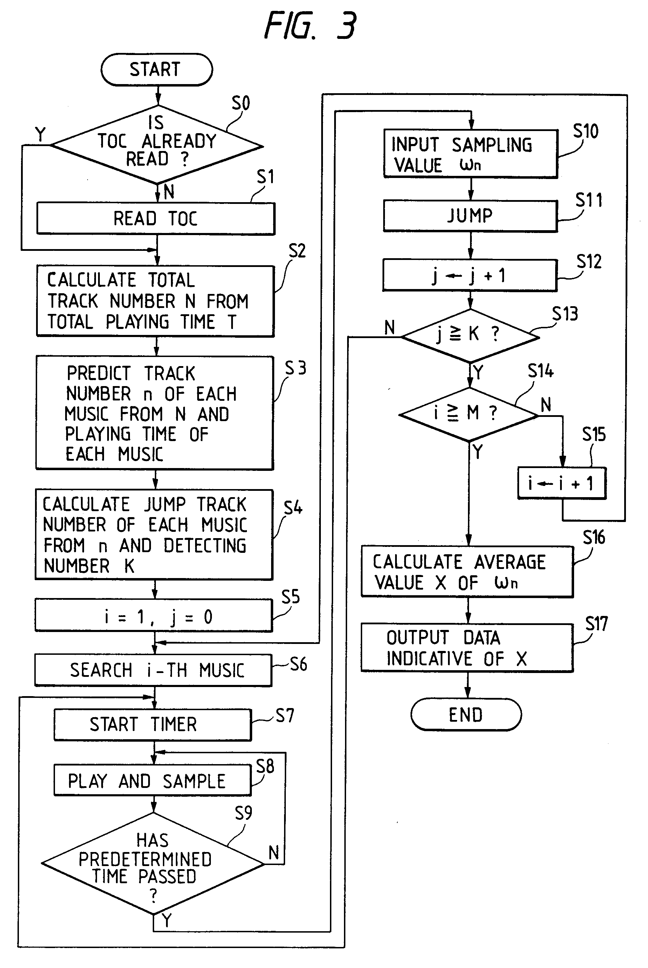

The operation of the second embodiment of the processor in the system controller 7 of the disk player A will next be described with reference to the flow chart in Figure 3.

When the command signal a for setting the sound recording level is outputted during the execution of a main routine, the processor proceeds to step S0 and judges whether data called TOC (Table of Contents) recorded as a subcode in the inner circumference of the disk 1 has been read, as in the first embodiment. When it is judged that the TOC data has not been read in the step S0, the processor proceeds to step S1 and transmits a playing command signal to the playing section control circuit 5 to start a reading operation of the information recorded on the disk 1, thereby inputting the TOC data. Next, the processor detects a total playing time by the inputted TOC data and calculates the total number of tracks N (step S2). The processor then predicts the number of tracks n with respect to each piece of music from the calculated total number of tracks N and the playing time of each piece of music (step S3). The processor calculates the number of jumped tracks with respect to each piece of music by the predicted number of tracks n of each piece of music and a predetermined number of detections K, and stores this calculated number in a predetermined region of the RAM (step S4). When it is judged that the TOC data has already been read in the step S0, the processor immediately proceeds to step S2 and calculates the total number of tracks N.

After the execution of step S4, the processor sets a counting value i for detecting the number of pieces of music to 1, and sets a counting value j for detecting the number of jumps to 0, and stores these counting values in a predetermined address of the RAM (step S5). Subsequently, the processor searches for the i-th piece of music (step S6), starts a timer (step S7), and then transmits the playing command to the playing section control circuit 5 and transmits the detecting command signal p to the peak value detecting circuit 14 (step S8). Subsequently, the processor judges whether or not a predetermined time has passed by the timer since the start of the playing operation (step S9).

When it is judged in step S9 that the predetermined time has not passed since the start of the playing operation, the processor proceeds again to step S8. Conversely, when it is judged in step S9 that the predetermined time has passed since the start of the playing operation, the processor stops the transmission of the detecting command signal p and inputs the output of the peak value detecting circuit 14 as a sampled value $\omega_n$ classified with respect to grades (step S10). The processor then transmits commands for performing the jumping operation by the number of jumped tracks calculated in step S4 to the playing section control circuit 5 (step S11). Subsequently, the processor increments the counting value j by one (step S12), and judges whether or not the counting value j is greater than K (step S13).

When it is judged in step S13 that the counting value j is not greater than K, the processor proceeds again to step S7. When it is judged in step S13 that the counting value j is greater than K, the processor judges whether or not the counting value i is greater than the total number of pieces of music M (step S14). When it is judged in step S14 that the counting value i is not greater than the total number M, the processor increments the counting value i by one (step S15), and proceeds again to step S6. Conversely, when it is judged in step S14 that the counting value i is greater than the total number M, the processor calculates an average value X of the sampled value by the following formula (step S16).

$$X = \frac{1}{MK} \cdot \sum_{n=1}^{\ell} \Delta n \; \omega_n \qquad \cdots\cdots\cdots\cdots (1)$$

where $\Delta$n designates a frequency of the sampled value (grade value) $\omega_n$. The processor then transmits data indicative of the obtained average value as sampled value data $\underline{d}$ together with the control signal $\underline{b}$ (step S17), and again executes the routine executed just before it proceeds to the step S0.

In the above steps S7 to S10, the playing operation is performed for a predetermined time and the sampling operation of the peak value of the reproduced audio signal is performed. The obtained peak value is stored as the sampled value $\omega_n$ classified with respect to grades in a predetermined region of the RAM within the system controller 7. In the steps S11 to S13, the playing operation for the sampling in the steps S7 to S10, and the jumping operation by the number of jumped tracks set in accordance with the playing time of the music with respect to each piece of music, are performed by K times for every piece of music. In the steps S14 and S15, this playing operation and the jumping operation are alternately performed every MK times in the entire region of the disk 1 containing the recorded audio signal. Thus, the sampling operation is sufficiently performed with respect to the peak voltage level of the music having a short playing time, and is not excessively performed with respect to the peak voltage level of a piece of music having a long playing time.

Accordingly, the MK peak values are obtained in steps S7 to S15 and are stored in the predetermined region of the RAM as the sampled value $\omega_n$ classified with respect to grades. The average value X of the sampled value $\omega_n$ is calculated in step S16 and the sampling value data $\underline{d}$ indicative of the average value X is supplied to the comparing circuit 24 in step S17.

The data f outputted from the reference level generating circuit 25 is data indicative of an optimal sound recording level set in advance by an operator. The voltage levels of the audio signals $e_L$, $e_R$ from the disk player A are controlled in accordance with the signal $\underline{g}$ corresponding to the difference between the peak value data $\underline{d}$ and the above data indicative of the optimal sound recording level. Accordingly, the voltage level of the audio signal is automatically controlled such that the average value of the peak value of the audio signal provided from the disk 1 is equal to the optimal sound recording level set in advance by the operator with respect to the tape recorder B.

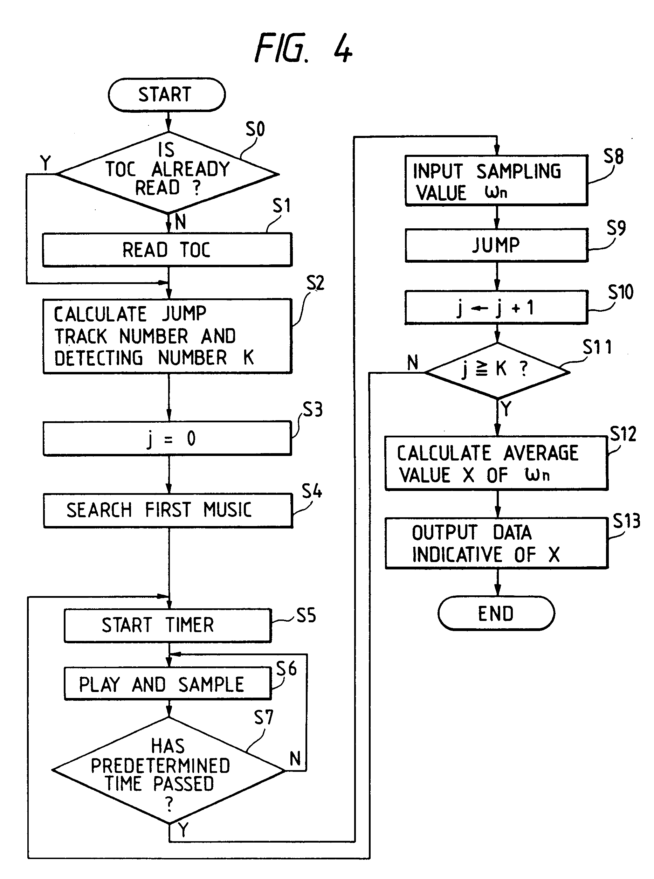

The operation of the third embodiment of the processor in the system controller 7 of the disk player A will next be described with reference to the flow chart in Figure 4.

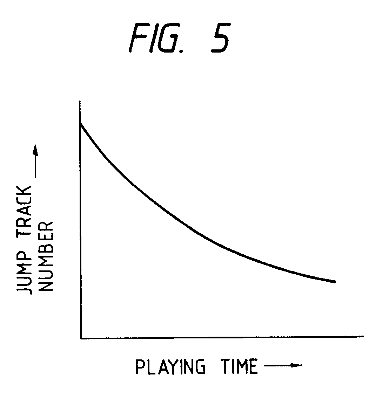

When the command signal $\underline{a}$ for setting the sound recording level is outputted during the execution of a main routine, the processor proceeds to step S0 and judges whether data called TOC (Table of Contents) recorded as a subcode in the inner circumference of the disk 1 has been inputted or not, as in the previous embodiments. When it is judged that the TOC data has not been inputted in the step S0, the processor proceeds to step S1 and transmits a playing command signal to the playing section control circuit 5 to start a reading operation of the information recorded on the disk 1, thereby inputting the TOC data. When the TOC information is inputted in step S0 and after the TOC information is inputted in step S1, the processor calculates the number of jumped tracks and the number of detections K in each jumping operation when the jumping operation and the playing operation for detecting the peak voltage level are alternately performed, thereby storing these numbers in a predetermined region of the RAM (step S2). The calculation of these numbers is performed by data indicative of an absolute start time of a first piece of music and a readout track start absolute time in the inputted TOC data, and by a formula representing the relation in which the number of jumped tracks is reduced as the total playing time becomes large (corresponding to the outer circumference of the disk) as shown in Figure 5.

Next, the processor sets the counting value j for detecting the number of detections to 0, and stores this value in a predetermined address of the RAM (step S3). Subsequently, the processor searches the first piece of music (step S4) and starts a timer (step S5), and then transmits the playing command to the playing section control circuit 5 and transmits the detecting command signal $\underline{p}$ to the peak value detecting circuit 14 (step S6). Subsequently, the processor judges whether or not a predetermined time has passed by the timer since the start of the playing operation (step S7).

When it is judged in the step S7 that the predetermined time has not passed since the start of the playing operation, the processor proceeds again to step S6. Conversely, when it is judged in step S7 that the predetermined time has passed since the start of the playing operation, the processor stops the transmission of the detecting command signal $\underline{p}$ and inputs the output of the peak value detecting circuit 14 as a sampled value $\omega_n$ classified with respect to grades (step S8). The processor then transmits commands for performing the jumping operation by the number of jumped tracks calculated in step S2 to the playing section control circuit 5 (step S9). Subsequently, the processor increments counting value j by one (step 10) and judges whether or not the counting value j is greater than K (step S11).

When it is judged in step S11 that the counting value j is not greater than K, the processor proceeds again to step S5. When it is judged in step S11 that the counting value j is greater than K, the processor calculates an average value X of the sampled value $\omega_n$ by the following formula (step S12).

6

$$X = \frac{1}{K} \cdot \sum_{n=1}^{\ell} \Delta n \ \omega_n \qquad \ldots\ldots\ldots\ldots(1)$$

where $\Delta n$ designates a frequency of the sampled value (grade value) $\omega_n$. The processor then transmits data indicative of the obtained average value as sampled value data $\underline{d}$ as well as the control signal $\underline{b}$ (step S13), and again executes the routine executed just before it proceeds to step S0.

In the above steps S5 to S8, the playing operation is performed for a predetermined time and the sampling operation of the peak value of the reproduced audio signal is performed. The obtained peak value is stored as the sampled value $\omega_n$ classified with respect to grades in a predetermined region of the RAM within the system controller 7. In the steps S9 to S11, the playing operation for the sampling in the steps S5 to S8, and the jumping operation by the number of jumped tracks reduced in accordance with the outer circumference of the disk, are alternately performed every K times in the entire region of the disk 1 containing the recorded audio signal. Accordingly, the sampling operation with respect to the music recorded on the outer circumferential side of the disk is performed similar to that on the inner circumferential side of the disk.

Thus, the K peak voltage levels are obtained in the steps S5 to S11 and are stored in the predetermined region of the RAM as the sampled value $\omega_n$ is calculated in step S12, and the sampling value data $\underline{d}$ indicative of the average value X is supplied to the comparing circuit 24 in step S13.

The data f outputted from the reference level generating circuit 25 is data indicative of an optimal sound recording level set in advance by an operator. The voltage levels of the audio signals $e_L$, $e_R$ from the disk player A are controlled in accordance with the signal $\underline{g}$ corresponding to the difference between the peak value data $\underline{d}$ and the above data indicative of the optimal sound recording level. Accordingly, the voltage level of the audio signal is automatically controlled such that the average value of the peak value of the audio signal provided from the disk 1 is equal to the optimal sound recording level set by the operator in advance with respect to the tape recorder B.

In the above embodiments, the sound recording level is set by controlling the gain on the tape recorder side, but may be set by controlling the gain on the disk player side. In the case of controlling the gain on the disk player side, two possible methods exist. A first method changes digital data and a second method changes an analog sound. Either of these two methods can be used in the sound recording level setting method of the present invention.

The above-mentioned embodiment of the present invention relates to the case in which the disk player and the recorder are separate units, but the present invention can be also applied to a case in which the disk player and the recorder are integrated into one unit.

As mentioned above, in accordance with the sound recording level setting method of the first embodiment of the present invention, the disk player alternately performs the playing and jumping operation so that the sampled value group is provided during each playing operation by setting the peak value of the audio signal provided from the disk as each sampled value, thereby providing the sound recording level in accordance with the average value of the sampled value group. Accordingly, even when the re-recording operation is performed with respect to an audio signal instantaneously having a very large voltage level in comparison with other voltage levels, the sound recording level does not conform to this instantaneously very large voltage level, but conforms to the average of the peak value. Therefore, a preferable sound recording level can be set such that the interval providing the optimal sound recording level is large.

Further, in accordance with the sound recording level setting method of the second embodiment of the present invention, the disk player alternately performs the playing and jumping operations and the peak level is sampled during each playing operation with respect to the audio signal provided from the disk to obtain the sampled value. In this case, the number of jumped tracks in the jumping operation is changed in accordance with the playing time of each piece of music to provide at least a predetermined number of sampled values every music. Accordingly, the sampling operation of the peak level is sufficiently performed with respect to music having a short playing time, and is not excessively performed with respect to music having a long playing time. Thus, the sound recording level can be preferably performed for a short time.

Finally, in accordance with the sound recording level setting method of the third embodiment of the present invention, the disk player alternately performs the playing and jumping operation so that the peak level of the audio signal obtained from the disk during each playing operation is sampled to provide a sampled value. When this sampled value is obtained, the number of jumped tracks in the jumping operation is reduced in accordance with the outer circumference of the disk. Therefore, the sampling operation of the peak level can be similarly performed with respect to the audio signal recorded in any position of the disk, thereby preferably setting the sound recording level.

**Claims**

1. A method for setting a sound recording level by reproducing a signal recorded on a disk (1) using a disk player (A) for playing the recorded disk, and a recorder (B) for recording the signal on a predetermined medium, the method comprising the following steps:

   alternately performing playing and track jumping operations by a disk player;

   sampling audio signals recorded on a disk to obtain a sampled value group representing peak values of the audio signals sampled during each of the playing operations; and,

   setting a sound recording level according to an average value of the sampled value group.

2. A method according to claim 1, wherein a plurality of pieces of music is recorded on the disk and a number of tracks jumped during the jumping operation changes according to a playing time of each of the pieces of music.

3. A method according to claim 1, wherein a number of tracks jumped during the track jumping operation is reduced as the jumping operation is performed towards the outer circumference of the disk.

4. A method according to any of claims 1 to 3, wherein the setting step comprises:

   adjusting a gain at an amplifying stage of one of the disk player and the recorder according to the average value of the sampled value group.

5. A method according to any of claims 1 to 4, wherein the disk player (A) and the recorder (B) are integrated into one unit.

6. A method according to any of claims 1 to 4, wherein the disk player (A) and the recorder (B) are provided as separate units.

**Patentansprüche**

1. Ein Verfahren zum Einrichten eines Tonaufnahmeniveaus durch Wiedergabe eines Signals, das auf einer Platte (1) aufgezeichnet ist, das einen Plattenspieler (A) zum Abspielen der bespielten Platten und ein Aufzeichnungsgerät (B) zur Aufzeichnung des Signals auf einem vorgegebenen Träger verwendet, wobei das Verfahren folgende Verfahrensschritte aufweist:

   alternierende Durchführung eines Abspiel- und Spursprungvorgangs über einen Plattenspieler;

   Abtasten von Audiosignalen, die auf einer Platte aufgezeichnet sind, um eine abgetastete Wertgruppe zu erhalten, die Spitzenwerte der Audiosignale darstellt, die während jedem der Abspielvorgänge abgetastet werden; und

   Festsetzen eines Tonaufnahmepegel entsprechend einem Mittelwert der abgetasteten Wertgruppe.

2. Verfahren nach Anspruch 1, wobei eine Vielzahl von Musikstücken auf der Platte aufgezeichnet sind und eine Anzahl von Spuren, die während des Sprungvorgangs übersprungen wird, entsprechend einer Abspielzeit jedes Musikstücks gewechselt wird.

3. Ein Verfahren nach Anspruch 1, wobei eine Zahl von Spuren, die während des Spursprungvorgangs verringert wird, wie der Sprungvorgang in Richtung des Außenumfangs der Platte gewählt wird.

4. Ein Verfahren nach einem der Ansprüche 1 bis 3, wobei der Festsetzverfahrensschritt folgende Merkmale aufweist:

   Einstellung eines Verstärkungsfaktors an einer Verstärkungsstufe entweder des Plattenspielers oder des Aufzeichnungsgeräts entsprechend dem Mittelwert der abgetasteten Wertgruppe.

5. Verfahren nach einem der Ansprüche 1 bis 4, wobei der Plattenspieler (A) und das Aufzeichnungsgerät (B) in einer Einheit integriert sind.

6. Ein Verfahren nach einem der Ansprüche 1 bis 4, wobei der Plattenspieler (A) und das Aufzeichnungsgerät (B) als getrennte Einheiten gebildet sind.

**Revendications**

1. Procédé de réglage d'un niveau d'enregistrement du son par lecture d'un signal enregistré sur un disque (1) à l'aide d'un lecteur de disque (A) pour la lecture d'un disque enregistré et d'un enregistreur (B) pour l'enregistrement du signal sur un support prédéterminé, le procédé comprenant les étapes suivantes :
   - des opérations alternées de lecture et de saut de piste par un lecteur de disque;
   - un échantillonnage des signaux audio enregistrés sur un disque pour obtenir un groupe de valeurs échantillonnées représentant les valeurs de pic des signaux audio échantillonnés pendant chacune des opérations de lecture; et
   - le réglage d'un niveau d'enregistrement du son selon une valeur moyenne du groupe de valeurs échantillonnées.

2. Procédé selon la revendication 1, selon lequel une pluralité de morceaux de musique sont enregistrés sur le disque et un certain nombre de pistes sautées lors de l'opération de saut change selon le temps de lecture de chacun des morceaux de musique.

3. Procédé selon la revendication 1, selon lequel un certain nombre de pistes sautées lors de l'opération de saut de piste est réduit pendant l'opération de saut vers la circonférence externe du disque.

4. Procédé selon l'une quelconque des revendications 1 à 3, selon lequel l'étape de réglage comprend le réglage du gain d'un étage d'amplification de l'un parmi le lecteur de disque et l'enregistreur selon la valeur moyenne du groupe de valeurs échantillonnées.

5. Procédé selon l'une quelconque des revendications 1 à 4, selon lequel le lecteur de disque (A) et l'enregistreur (B) sont intégrés dans une unité.

6. Procédé selon l'une quelconque des revendications 1 à 4, selon lequel le lecteur de disque (A) et l'enregistreur (B) sont prévus sous la forme d'unités séparées.

FIG. 1

EP 0 363 186 B1

# FIG. 2

START

S0 — IS TOC ALREADY READ ?

Y

N

S1 — READ TOC

S2 — CALCULATE TOTAL TRACK NUMBER N FROM TOTAL PLAYING TIME T

S3 — PREDICT DETECTING NUMBER K

S4 — $j = 0$

S5 — START TIMER

S6 — PLAY AND SAMPLE

S7 — HAS PREDETERMINED TIME PASSED ?

N

Y

S8 — INPUT SAMPLING VALUE $\omega_n$

S9 — JUMP

S10 — $j \leftarrow j + 1$

S11 — $j \geq K$ ?

N

Y

S12 — CALCULATE AVERAGE VALUE X OF $\omega_n$

S13 — OUTPUT DATA INDICATIVE OF X

END

EP 0 363 186 B1

# FIG. 3

START

**S0** IS TOC ALREADY READ ?
Y / N

**S1** READ TOC

**S2** CALCULATE TOTAL TRACK NUMBER N FROM TOTAL PLAYING TIME T

**S3** PREDICT TRACK NUMBER n OF EACH MUSIC FROM N AND PLAYING TIME OF EACH MUSIC

**S4** CALCULATE JUMP TRACK NUMBER OF EACH MUSIC FROM n AND DETECTING NUMBER K

**S5** $i = 1$, $j = 0$

**S6** SEARCH i-TH MUSIC

**S7** START TIMER

**S8** PLAY AND SAMPLE

**S9** HAS PREDETERMINED TIME PASSED ? N / Y

**S10** INPUT SAMPLING VALUE $\omega_n$

**S11** JUMP

**S12** $j \leftarrow j + 1$

**S13** $j \geqq K$ ? N / Y

**S14** $i \geqq M$ ? N / Y

**S15** $i \leftarrow i + 1$

**S16** CALCULATE AVERAGE VALUE X OF $\omega_n$

**S17** OUTPUT DATA INDICATIVE OF X

END

12

# FIG. 4

```
        ( START )
            │
            ▼
         ╱──────╲        S0
    Y   ╱   IS    ╲
  ◄────╱ TOC ALREADY╲
       ╲   READ ?   ╱
        ╲──────────╱
            │ N
            ▼              S1
      ┌──────────────┐
      │   READ TOC   │
      └──────────────┘
            │
            ▼              S2
      ┌──────────────┐
      │CALCULATE JUMP│
      │TRACK NUMBER AND│
      │DETECTING NUMBER K│
      └──────────────┘
            │
            ▼              S3
      ┌──────────────┐
      │    j = 0     │
      └──────────────┘
            │
            ▼              S4
      ┌──────────────┐
      │SEARCH FIRST MUSIC│
      └──────────────┘
            │
            ▼              S5
      ┌──────────────┐
      │ START TIMER  │
      └──────────────┘
            │
            ▼              S6
      ┌──────────────┐
      │PLAY AND SAMPLE│
      └──────────────┘
            │
            ▼              S7
         ╱──────╲
        ╱  HAS   ╲    N
       ╱PREDETERMINED╲───►
       ╲TIME PASSED ╱
        ╲    ?    ╱
         ╲──────╱
            │ Y
```

```
            ▼              S8
      ┌──────────────┐
      │INPUT SAMPLING│
      │  VALUE  ωn   │
      └──────────────┘
            │
            ▼              S9
      ┌──────────────┐
      │     JUMP     │
      └──────────────┘
            │
            ▼              S10
      ┌──────────────┐
      │  j ← j + 1   │
      └──────────────┘
            │
            ▼              S11
    N    ╱──────╲
  ◄─────╱ j ≧ K ? ╲
        ╲──────────╱
            │ Y
            ▼              S12
      ┌──────────────┐
      │CALCULATE AVERAGE│
      │ VALUE X OF ωn │
      └──────────────┘
            │
            ▼              S13
      ┌──────────────┐
      │ OUTPUT DATA  │
      │INDICATIVE OF X│
      └──────────────┘
            │
            ▼
         ( END )
```

## FIG. 5